Europäisches Patentamt

European Patent Office

Office européen des brevets

(19)

(11) **EP 0 510 166 B1**

(12) **FASCICULE DE BREVET EUROPEEN**

(45) Date de publication et mention
de la délivrance du brevet:
**21.08.1996 Bulletin 1996/34**

(21) Numéro de dépôt: **92900206.1**

(22) Date de dépôt: **08.11.1991**

(51) Int Cl.⁶: **H02H 5/10**, H02H 3/33

(86) Numéro de dépôt international:
**PCT/FR91/00880**

(87) Numéro de publication internationale:
**WO 92/09129 (29.05.1992 Gazette 1992/12)**

(54) **DISPOSITIF TRAITANT L'INFORMATION DONNEE PAR LE POTENTIEL DE CONTACT, ASSOCIE A UN ORGANE DE COUPURE**

MIT EINEM SCHALTORGAN VERWANDTER, INFORMATION AUS DEM BERÜHRUNGSPOTENTIAL VERARBEITENDER EINRICHTUNG

DEVICE FOR PROCESSING DATA PROVIDED BY THE CONTACT POTENTIAL, AND CUTOFF DEVICE LINKED THERETO

(84) Etats contractants désignés:
**BE DE ES IT NL**

(30) Priorité: **09.11.1990 FR 9013936**

(43) Date de publication de la demande:
**28.10.1992 Bulletin 1992/44**

(73) Titulaires:
• **BARTHELEMY, Louis**
  **F-95120 S.-Gratien (FR)**
• **PEIFFERT, Jean**
  **F-60500 Chantilly (FR)**

(72) Inventeurs:
• **BARTHELEMY, Louis**
  **F-95120 S.-Gratien (FR)**
• **PEIFFERT, Jean**
  **F-60500 Chantilly (FR)**

(74) Mandataire: **Lejet, Christian et al**
  **Cabinet C. Lejet,**
  **4, bd. Voltaire**
  **92600 Asnières (FR)**

(56) Documents cités:
**WO-A-86/01299        GB-A- 2 072 443**
**GB-A- 2 128 047**

**Description**

La présente invention concerne un dispositif de sécurité et de protection contre les dangers de l'énergie électrique dûs à des potentiels de contact inadmissibles pour le corps humain sur un circuit de mise à la terre en raison d'impédance trop élevée ou de discontinuité du circuit de mise à la terre.

La présente invention est essentiellement concernée par la limitation du courant de défaut traversant le corps humain en contact avec le circuit de terre local auquel sont branchés des appareils consommateurs d'énergie électrique dans une installation domestique ou industrielle.

On sait que l'on utilise des circuits de mise à la terre pour diriger vers celle-ci les courants de fuite et notamment ceux créés par un éventuel court-circuit entre le conducteur de phase et la masse de l'appareil électrique considéré.

On sait aussi que la qualité d'un circuit de mise à la terre et par conséquent celle de la sécurité qui lui est associée dépend de l'impédance de ce circuit.

Ainsi, en prenant l'exemple classique de la mise à la terre du conducteur de phase dans un appareil électrique, si l'impédance du circuit de mise à la terre de l'ensemble de l'installation est très faible, la quasi-totalité du courant de fuite passera par ce circuit y compris dans l'hypothèse où un usager viendrait à toucher accidentellement la masse de l'appareil électrique considéré.

En revanche, dans l'hypothèse où l'impédance globale du circuit de mise à la terre est assez élevée (voire même infinie dans le cas d'une coupure de ce circuit) une partie importante du courant de fuite (et même la totalité dans le cas d'une coupure) passera par le corps de l'usager considéré.

Depuis longtemps, il a été fait des essais et il est généralement admis qu'un courant de 10 mA passant par le corps d'un être humain est susceptible de créer des lésions irréversibles des que le temps de passage du courant est supérieur à 100 ms.

Aussi on conçoit qu'il est important de pouvoir maitriser l'impédance globale du circuit de mise à la terre.

L'homme du métier s'est déjà trouvé confronté à ce problème.

Il convient de rappeler ici que la mesure d'une prise de terre est un ensemble d'opérations fort coûteuses et difficiles à réaliser.

En effet, selon la technique classique, la première condition est d'isoler l'alimentation électrique de la prise de terre, ce qui entraine une rupture du fonctionnement des appareils en service pendant le temps de contrôle. Une telle solution est rarement acceptée par les usagers et présente par ailleurs l'inconvénient de ne pas être continue.

De plus les mesures classiques de prise de terre nécessitent l'implantation de pieux régulièrement espacés, ce qui n'est ni pratique ni fiable.

Ces conditions contraignantes ont pour effet de limiter dans la réalité le contrôle des prises de terre bien que ce dernier soit imposé par des règles impératives édictées dans la plupart des pays. Et, en réalité, ce contrôle est quasiment nul dans les installations domestiques.

Aussi, d'une manière générale, se pose le problème de pouvoir faire une mesure et d'assurer la protection des usagers de l'énergie électrique de façon continue pour pouvoir détecter un défaut dès qu'il se produit, cette mesure ne devant en aucun cas être néfaste pour les appareils raccordés au réseau (surtout s'agissant d'appareils tels que les ordinateurs).

On sait que la conductivité d'un sol est mauvaise et qu'elle est essentiellement variable en fonction des conditions météorologiques.

Aussi, on sait qu'il existe un dispositif de protection remarquable par sa fiabilité et son efficacité, c'est le fameux relais différentiel.

L'analyse de son fonctionnement fait apparaitre que le seuil de déclenchement est uniquement fonction de la valeur du courant de défaut maximum pour assurer la protection des individus et des machines, et ceci sans tenir compte de la valeur du potentiel de contact sur le circuit de mise à la terre.

En effet, les potentiels de contacts portés sur un circuit de mise à la terre sont représentés par l'équation de la loi d'Ohm en régime alternatif :

$$\vec{u} = Ri + L\frac{di}{dt} + \frac{1}{C} \int i dt.$$

Cette observation pertinente autorise à déclarer avec certitude qu'il ne suffit pas de faire effectuer les contrôles pseudo-périodiques de la valeur résistive d'un puits de terre; mais de prendre en compte l'intégralité des états complexes, à tous les instants, du circuit de mise à la terre.

L'application des normes d'installations électriques dans différents pays sont claires : il est impératif et obligatoire d'installer un puits de terre, dès qu'on assure la protection des personnes et des machines par un disjoncteur différentiel.

On connait le document WO-A-86/01299 qui décrit un circuit de contrôle permanent de la résistance de terre d'un appareil électrique dont les conducteurs sont susceptibles d'être touchés par quelqu'un. Ce circuit met en oeuvre un générateur d'impulsions de test et un condensateur d'injection du courant d'impulsions dans le circuit de mise à la terre. Un tel circuit permet de vérifier la continuité du circuit de mise à la terre. Toutefois, le courant d'impulsions étant indépendant du potentiel de contact sur le circuit de mise à la terre, ce circuit ne tient pas compte du danger réel. En outre, l'utilisation d'impulsions non calibrées (décharges de condensateurs) ne permet que difficilement une mesure valable de la résistance de terre en passant par le circuit complexe constitué par une installation électrique.

Le document GB-A-2 072 443 concerne un dispositif, tel que défini dans le préambule de la revendication 1, de contrôle de la continuité de la terre et des fuites vers la terre pour la protection des personnes. Le dispositif génère un courant de mesure indépendant des courants de défaut dans une boucle comprenant le circuit de mise à la terre et un conducteur pilote pour détecter une discontinuité du circuit de mise à la terre. Il n'est pas tenu compte du potentiel de contact sur le circuit de mise à la terre. En cas de discontinuité un courant de défaut est produit au moyen d'une résistance et d'un contact d'un relais, ce qui actionne un disjoncteur différentiel.

La présente invention a pour but d'obvier à ces inconvénients en utilisant le potentiel de contact généré par les courants de défaut naturels de l'installation électrique.

Ce but est atteint grâce à un dispositif tel que défini par la revendication 1.

Grâce à ce dispositif, la protection est actionnée au moment où les courants de défaut et les potentiels de contacts se manifestent.

En effet, si nous négligeons le potentiel de contact porté sur le conducteur de mise à la terre, le disjoncteur différentiel coupera l'alimentation électrique lorsque les courants de défaut atteindront la valeur maximum préréglée.

Dans ce cas limite, analysons la situation d'un individu en contact avec le conducteur de mise à la terre.

On sait que la résistance du corps humain est en parallèle avec le conducteur de mise à la terre.

Si le conducteur de mise à la terre est à impédance infinie, le corps humain sera traversé par le courant de défaut pouvant atteindre celui du réglage du disjoncteur différentiel. A ce moment, le potentiel de contact pourrait atteindre une valeur hors normes et dangereuse sans pour autant faire déclencher le disjoncteur différentiel. La conséquence est importante et le risque est mortel pour les personnes en danger d'électrocution.

Le dispositif, selon l'invention permet de remédier à cet inconvénient majeur. Il comporte en effet un système de mesure du potentiel de contact du conducteur de mise à la terre et selon la valeur de cette information proportionnelle à l'état impédant du circuit de mise à la terre, il délivre un signal pour générer une disjonction.

Il faut préciser que l'information voltmétrique est indépendante de l'information courant de fuite et que l'une ou l'autre ou les deux ensemble peuvent agir sur un relais différentiel commun pour générer une disjonction.

Ledit dispositif est branché soit entre le neutre et le circuit de la mise à la terre, soit entre le neutre et une terre de mesure du terminal de distribution d'énergie électrique.

Selon une autre caractéristique de l'invention, on observera en outre que le dispositif peut être branché dans des installations où le neutre est confondu avec la terre (installations d'alimentations triphasées).

Avantageusement, le dispositif est adapté à commander un déséquilibre des courants dans les conducteurs de la phase et du neutre pour générer une disjonction.

Grâce à ces dispositions, dès que l'appareil détecte une coupure de circuit de terre ou, tout au moins, une élévation importante de son impédance, la disjonction est commandée. Dans un mode de réalisation préféré de cette variante de l'invention, l'appareil comporte un dispositif à triacs destiné à générer ledit déséquilibre.

Cette disposition est particulièrement simple à mettre en oeuvre.

Le dispositif selon la présente invention répond parfaitement aux soucis de certains utilisateurs d'installer des disjoncteurs différentiels dont le seuil est réglé entre 300 mA, 650 mA et plus, ce qui est normal pour la protection des machines et pour éviter les risques d'incendie, mais intolérable pour le courant traversant le corps humain en cas de coupure de circuit de terre ou d'élévation inconsidérée de son impédance.

Les caractéristiques et avantages de l'invention ressortiront d'ailleurs de la description qui va suivre en référence aux dessins annexés sur lesquels :

- la figure 1 est un schéma de principe d'un dispositif conforme à l'invention
- la figure 2a est un schéma de principe d'un mode de réalisation de l'alimentation illustrée en figure 1
- la figure 2b est un schéma de principe d'un mode de réalisation d'un filtre accordé à la fréquence du secteur illustré en figure 1
- la figure 3a est un schéma de principe d'un mode de réalisation précisant les points de contrôle pour une installation électrique mono-phasée ou tri-phasée du type T.T. conforme aux installations domestiques ou industrielles comportant un neutre à la terre côté secondaire du transformateur d'alimentation et une terre séparée connectée aux différentes masses de l'installation électrique illustrées en figure 1 et
- la figure 3b illustre, de façon schématique, une autre utilisation conforme à la norne T.N. (terre et neutre confondus) dont le neutre réuni à la terre est commun à toutes les masses de l'installation électrique y compris les liaisons équipotentielles.

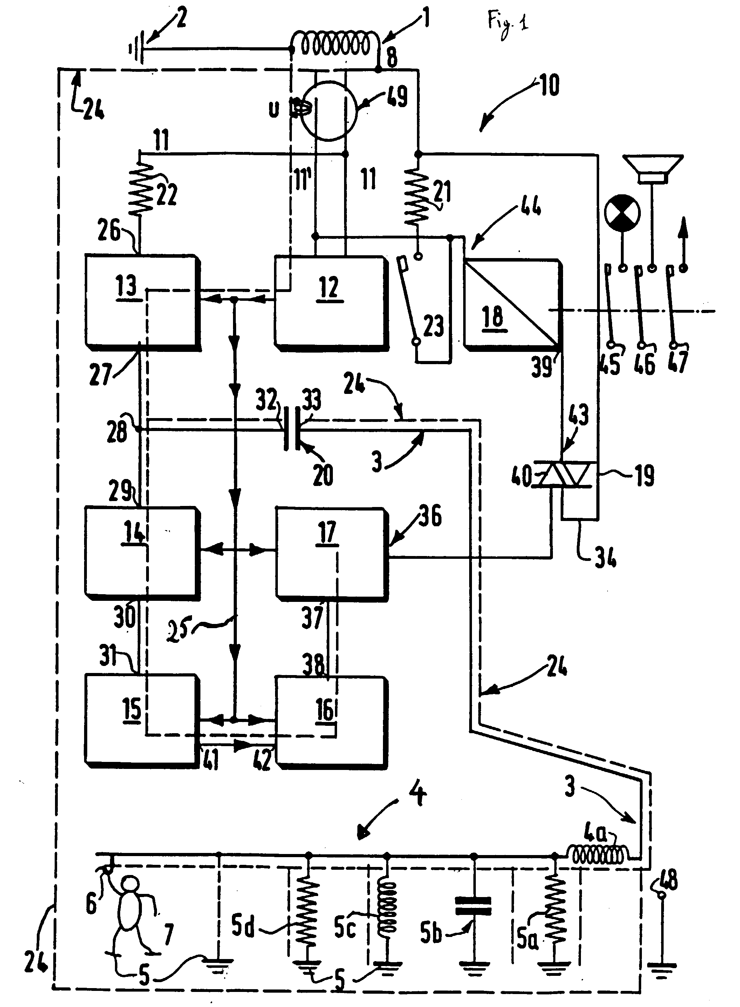

La représentation de la terre de mesure permet l'utilisation du dispositif branché entre celle-ci et le neutre de l'installation comme illustré sur la figure 1.

Le dispositif, selon la présente invention, est destiné à être interposé entre le point neutre de la distribution d'énergie électrique et une prise de terre locale 3 (montage terre à la terre) ou une prise de terre de mesure 48 (montage terre neutre confondus).

Sur la figure 1 le dispositif conforme à l'invention porte la référence générale 10. Il est interposé entre un terminal au point neutre de distribution d'énergie électrique (220 volts alternatif dans cet exemple), ce point étant schématisé par un transformateur 1 comportant sa propre prise de terre 2 et une prise de terre locale 3.

La prise de terre locale 3 est raccordée à un circuit de terre 4, lui-même raccordé à une prise de terre réelle 5, pouvant être constitué par exemple par un pieu planté dans le sol. La prise de terre locale 3 constitue ici l'entrée du circuit de terre 4.

D'une manière générale le circuit de terre est plutôt inductif comme illustré par l'impédance 4a. En fait, l'impédance de ce circuit est complexe. La prise de terre peut être essentiellement résistive (5a), essentiellement capacitive (5b), essentiellement inductive (5c), ou, plus généralement présente une combinaison des trois impédances susmentionnées.

En figure 1, on a illustré ces impédances en parallèles. Dans la réalité les impédances se combinent de façon beaucoup plus complexe et aléatoire. Comme expliqué plus haut, le circuit de mise à la terre peut présenter un danger, celui d'avoir une impédance particulièrement élevée en aval d'un point de contact fortuit avec une personne.

En 7, on a ainsi illustré une silhouette venant en contact en 6 avec le circuit de mise à la terre 4.

Si l'impédance globale du circuit de mise à la terre est supérieure à celle du corps, l'essentiel du courant éventuel de fuite passera au travers du personnage 7, ce qui, comme expliqué plus haut est particulièrement dangereux.

Selon le mode de réalisation choisi et représenté en figure 1, le dispositif conforme à l'invention mesure le potentiel de contact du circuit de mise à la terre et comporte une alimentation 12 raccordée au conducteur de neutre 11' d'un terminal de distribution d'énergie électrique.

L'alimentation 12, dont un mode de réalisation sera décrit plus loin à l'appui de la figure 2a, est essentiellement adaptée à générer deux potentiels continus et stables dont la référence est reliée au conducteur 25.

Ce conducteur est raccordé :

-  à un générateur de courant programmé 13 ;
-  un adaptateur d'impédance 14 ;
-  à un filtre accordé 15,
-  à un trigger 16 ;
-  à un déclencheur 17.

Le conducteur 25 commun et branché aux éléments 12 - 13 - 14 - 15 - 16 et 17 représente la référence 0 de l'alimentation redressée et par conséquent le neutre et la terre du transformateur 1, soit le point 11'.

L'alimentation réalisée à partir de 220 volts alternatif, 11 et 11', fonctionne par le transfert de la quantité d'électricité chargée alternativement positivement et négativement dans un condensateur.

Le 0 de l'alimentation est la référence de toute l'électronique et représente le neutre de l'installation.

Le générateur à courant programmé 13 (impédance infinie) a une entrée alimentée en alternatif à la fréquence du secteur en un point 11 à travers une résistance de limitation 22 et raccordée à la borne 26 de l'élément 13. Ce générateur injecte un courant programmé de l'ordre par exemple de 0,5 mA destiné à la vérification de la continuité de la boucle de protection.

Ce courant est injecté à partir du point 27 vers le point de mesure 28 vers le point 32 du condensateur 20 destinée à réaliser une liaison non galvanique à la sortie de celle-ci 33 vers le point de terre 3.

L'adapteur d'impédance 14 a pour objet de mesurer le potentiel de contact de l'ensemble de la boucle de protection, son entrée 29 est réunie au point de mesure 28 représentant d'une part la terre de l'installation électrique et raccordée d'autre part sur le conducteur 25 représentant le neutre de l'installation électrique.

L'information de la mesure du potentiel de contact est reçue au point 30 pour être raccordée au point 31 du filtre 15, accordé à la fréquence du secteur pour éviter les perturbations transitoires. A la sortie de ce filtre 41, l'information de mesure, dépouillée de toute information transitoire, est connectée au 42 entrée du trigger 16.

Le trigger 16 est destiné à fournir l'information finale de déclenchement, détectée et mise en forme par l'adapteur d'impédance et le filtre.

La sortie 38 du trigger 16 est raccordée à l'entrée 37 du déclencheur 17.

Le déclencheur 17 est un système de commande pour thyristors, montage tête-bêche, destiné à alimenter par tout ou rien un relais électro-mécanique sur le réseau alternatif.

La sortie 36 générant l'information de commande et réunie au point 40, porte du système "triacs" ou "thyristors", montage tête-bêche 19, destiné à alimenter la bobine d'un relais électro-mécanique 18 dont l'entrée 34 est raccordée à la phase du secteur 11 et la sortie 43 vers l'entrée 39 du relais, et sa sortie 44 vers le neutre 11'.

Ce relais électro-mécanique peut comporter un ou plusieurs contacts mécaniques.

La fonction essentielle de ce relais électro-mécanique 18 est de provoquer un courant de défaut en cas de dépassement du potentiel de contact en connectant par le contact 23, le neutre 11' à la phase 8 avant le tore 49, à travers une résistance de limitation 21.

Le calcul de la résistance 21 permettra de faire passer un courant de défaut supérieur au réglage de courant de disjonction différentielle, pendant le temps de disjonction de celui-ci.

Le dispositif selon la présente invention permet de commander la disjonction à partir du moment où l'impédance du circuit de terre est trop élevée ou lorsque le circuit de terre est coupé.

Pour ce faire, selon une caractéristique de la présente invention, on provoque alors un déséquilibre dans le tore 49 au moyen d'une résistance 21 commandé par un dispositif à triac 19 lui-même commandé par le signal en sortie 36 du déclencheur 17

Bien sur, il est possible de prévoir l'utilisation des contacts mécaniques supplémentaires du relais 18 pour créer simultanément une alarme visuelle par le contact 45 ou une alarme sonore par l'intermédiaire du contact 46.

Le dispositif selon la présente invention permet avantageusement d'avoir un point de mesure 28 commun à un circuit de terre isolé galvaniquement par un condensateur de sécurité, et à un circuit de mesure où l'adapteur d'impédance 14 reçoit d'une part une tension générée par le générateur de courant programmé destiné à vérifier la continuité du conducteur de protection et d'autre part et simultanément le potentiel de contact.

La somme vectorielle de ces deux tensions, mesurée sur un circuit à haute impédance, est la vraie valeur de la somme des impédances.

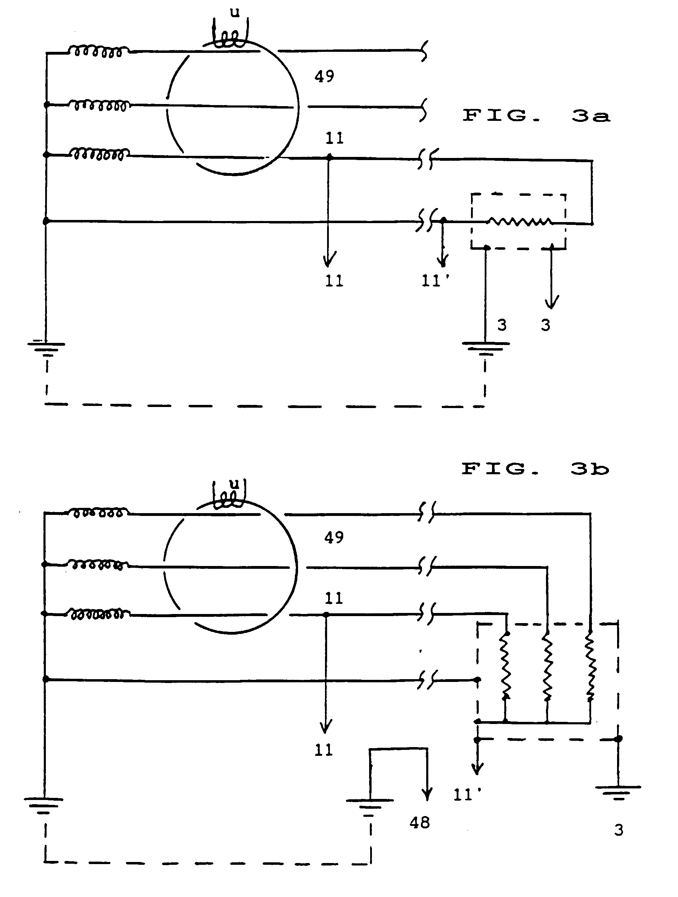

Les inventeurs ont illustré sur les figures 3a et 3b les schémas d'alimentations électriques conformes aux normes en vigueur et précisent les points d'alimentation et de mesure selon le cas où le circuit de terre est séparé du neutre et où ce circuit est confondu avec le neutre. Les points 11 et 11' étant l'alimentation dudit dispositif et le point 3 le point de mesure illustré en figure 1.

Bien entendu, la présente invention ne se limite nullement au mode de réalisation décrit et représenté ici.

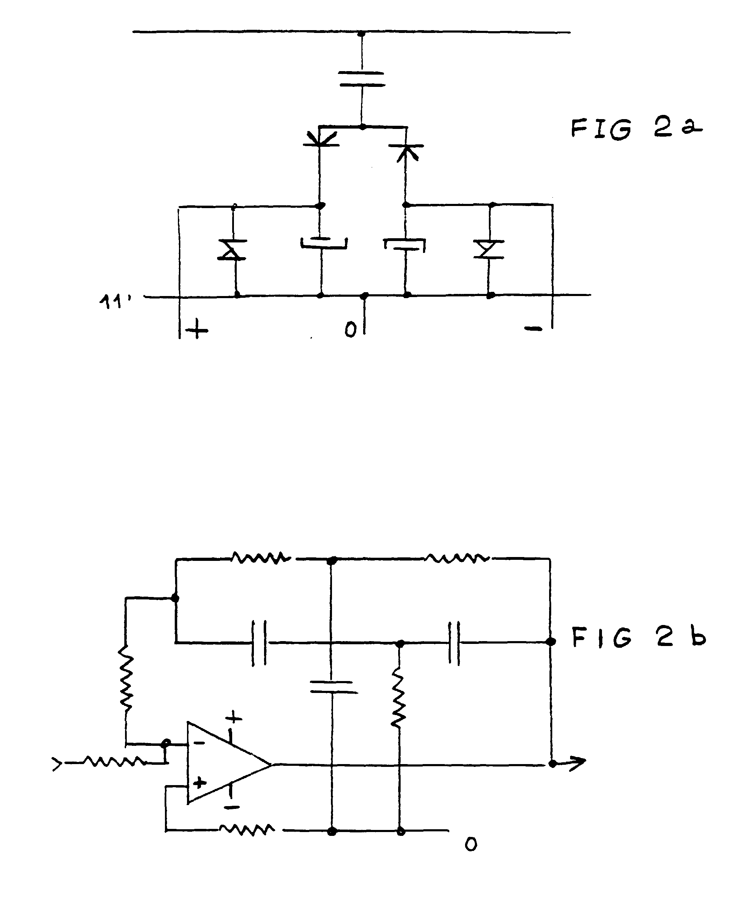

Il apparait ainsi que l'homme de l'art peut réaliser plusieurs des éléments décrits à l'appui de la figure 1 au moyen de structures équivalentes. C'est aussi le cas des éléments décrits à l'appui des figures 2a et 2b.

L'utilisation d'un relais différentiel inutile dans le cas d'une installation électrique à neutre confondu avec la terre devient grâce à l'invention un élément actif pour permettre une disjonction en cas de défaut.

## Revendications

1. Dispositif de sécurité et de protection contre les dangers de l'énergie électrique, dûs à des potentiels de contact inadmissibles pour le corps humain sur un circuit de mise à la terre, en raison d'impédance trop élevée ou de discontinuité du circuit de mise à la terre, comportant un relais différentiel (49) branché en amont d'un circuit de distribution électrique, équipé de moyens de coupure du circuit de distribution électrique; et un ensemble électronique (10) comportant

   un moyen constitué d'une résistance (21) et d'un contact (23) d'un relais électro-magnétique (18) permettant de dériver un courant de défaut d'une phase (8) vers le neutre (11') du circuit de distribution électrique et provoquer un déséquilibre dans le dit relais différentiel (49) utilisable pour déclencher les dits moyens de coupure; et
   une alimentation (12) des circuits constituant le dit ensemble;

   caractérisé en ce que le dit ensemble électronique (10) comprend en outre :

   un moyen (13) permettant de générer un courant alternatif de mesure programmé ;
   un condensateur (20) d'injection de ce courant dans le circuit de mise à la terre ;
   un moyen (14) d'adaptation d'impédance et de mesure de potentiel traduisant la valeur de l'impédance du circuit de mise à la terre,
   le dit moyen (14) d'adaptation d'impédance et de mesure de potentiel étant agencé pour mesurer la différence de potentiel entre la sortie (27) du moyen (13) permettant de générer un courant alternatif de mesure rogrammé au dit condensateur (20) d'injection de ce courant dans le circuit de mise à la terre, et le neutre (11') du réseau de distribution électrique;
   un moyen (15) de filtrage et de réjection des perturbations transitoires accordé sur la fréquence du circuit de distribution électrique;
   un moyen (16) de détection de seuil produisant un signal de dépassement de potentiel admissible sur le circuit de mise à la terre;
   un moyen (17) de traitement de ce signal pour déclenchement d'un élément de commutation (19) pilotant le dit relais électro-magnétique (18);
   un moyen pour piloter par des contacts (45, 46) du dit relais électro-magnétique (18) un avertissement ou une alerte visuelle ou sonore.

2. Dispositif selon la revendication 1., caractérisé en ce que l'alimentation (12) est réalisée sans isolation galvanique par rapport au circuit de distribution, de telle sorte que le point commun (25), référence 0 des circuits alimentés, soit électriquement lié au conducteur (11'), représentant le neutre du circuit de distribution.

3. Dispositif selon la revendication 1., caractérisé en ce que le générateur de courant de mesure (13), produit un courant alternatif de 0,7 mA eff. permettant, sans danger pour le corps humain, la vérification permanente de la continuité du circuit de mise à la terre.

## Patentansprüche

1. Sicherheits- und Schutzvorrichtung gegen die Gefahren der elektrischen Energie, hervorgerufen durch für eine Berührung durch den menschlichen Körper unzulässige Potentiale in einem Erdungskreis aufgrund von zu hoher Impedanz oder Unterbrechung des Erdungskreises, umfassend ein Differentialrelais (49), einem Stromverteilerkreis vorgeschaltet, ausgerüstet mit Einrichtungen zum Abschalten des Stromverteilerkreises; und eine elektronische Gruppe (10), umfassend eine Einrichtung, gebildet durch einen Widerstand (21) und einen Kontakt (23) eines elektromagnetischen Relais (18) zum Ableiten einen Fehlerstrom einer Phase (8) zum Nulleiter (11) des Stromverteilerkreises und zum Verursachen einer Unsymetrie bzw. Unbalanz in dem Differentialrelais (49), nutzbar für das Auslösen besagter Abschalteinrichtungen; und eine Versorgung (12) der Schaltungen, die die genannte Gruppe bilden;

**dadurch gekennzeichnet,**

daß besagte elektronische Gruppe (10) außerdem umfaßt:

- eine Einrichtung (13) zum Erzeugen eines programmierten Meß-Wechselstroms;
- einen Kondensator (20) zum Einspeisen dieses Stroms in den Erdungskreis;
- eine Einrichtung (14) zur Impedanzanpassung und zur Potentialmessung, die den Wert der Impedanz des Erdungskreises wiedergibt,

wobei besagte Einrichtung (14) zur Impedanzanpassung und Potentialmessung vorgesehen ist, den Potentialunterschied zu messen zwischen dem Ausgang (27) der Einrichtung (13) zum Erzeugen eines programmierten Meß-Wechselstroms an besagtem Kondensator zum Einspeisen dieses Stroms in den Erdungskreis, und dem Nulleiter (11') des Stronverteilerkreises;

- eine Einrichtung (15) zum Filtrieren und Unterdrücken von transienten bzw. momentanen Störungen, abgestimmt auf die Frequenz des Stromverteilerkreises;
- eine Schwellendetektionseinrichtung (16), die ein Signal erzeugt bei Überschreitung des zulässigen Potentials im Erdungskreis;
- eine Verarbeitungseinrichtung (17) dieses Signals zum Auslösen eines Schaltelements (19), das das genannte elektromagnetische Relais steuert;
- eine Einrichtung, um durch Kontakte (45, 46) des besagten elektromagnetischen Relais (18) eine Warnung oder einen visuellen Alarm zu steuern.

2. Vorrichtung nach Anspruch 1, dadurch gekennzeichnet, daß die versorgung (12) bezüglich des Verteilerkreises ohne galvanische Isolierung ausgeführt ist, so daß der gemeinsame Punkt (25), 0-Bezugspunkt der versorgten Schaltungen, elektrisch verbunden ist mit dem Leiter (11'), der den Nulleiter des Verteilerkreises darstellt.

3. Vorrichtung nach Anspruch 1, dadurch gekennzeichnet, daß der Meßstromgenerator (13) einen Wechselstrom mit 0,7 mA eff. erzeugt, der ohne Gefahr für den menschlichen Körper eine permanente Prüfung der Kontinuität des Erdungskreises ermöglicht.

**Claims**

1. Safety device for protection from the dangers of electrical energy which are caused by contact potentials beyond the tolerance limits of the human body, on an earthing circuit, as a result of excessively high impedance or discontinuity of the earthing circuit, comprising a differential relay (49) connected upstream of an electricity distribution circuit, provided with means for cutting off the electricity distribution circuit; and an electronic assembly (10) comprising

   a device consisting of a resistor (21) and a contact (23) of an electromagnetic relay (18) for shunting a fault current from one phase (8) towards the neutral point (11') of the electricity distribution circuit and causing a disequilibrium in said differential relay (49) which can be used to actuate said cutoff means; and
   a supply (12) to the circuits which constitute the said assembly;

   characterised in that the said electronic assembly (10) further comprises:

   means (13) for generating a programmed alternating measuring current;
   a capacitor (20) for injecting this current into the earthing circuit;
   impedance adapting and potential measuring means (14) indicating the level of the impedance of the earthing circuit, the said impedance adapting and potential measuring means (14) being arranged so as to measure the potential difference between the output (27) of the means (13) for generating a programmed alternating measuring current for said capacitor (20) for injecting this current into the earthing circuit, and the neutral point (11') of the electricity distribution network;
   means (15) for filtering and rejecting transient interference tuned to the frequency of the electricity distribution circuit;
   threshold detecting means (16) producing a signal indicating that the permissible potential has been exceeded on the earthing circuit;
   means (17) for processing this signal in order to actuate a switching element (19) which controls said electromagnetic relay (18);
   means for controlling a visual or audible warning or alarm, by means of contacts (45, 46) of said electromagnetic relay (18).

2. Device according to claim 1, characterised in that the supply (12) is provided with no galvanic insulation relative to the distribution circuit, so that the common point (25), reference 0 of the circuits supplied, is electrically connected to the conductor (11'), representing the neutral of the distribution circuit.

3. Device according to claim 1, characterised in that the measuring current generator (13) produces an alternating current of 0.7 mA eff. which makes it possible to monitor the continuity of the earthing circuit at all times without any danger to the human body.

Fig. 1

FIG 2a

11'

+     0     —

FIG 2b

0

FIG. 3a

FIG. 3b

10